Europäisches Patentamt

(19) European Patent Office

Office européen des brevets

(11) Publication number: **0 217 185**
**B1**

# (12) EUROPEAN PATENT SPECIFICATION

(45) Date of publication of the patent specification:
23.05.90

(21) Application number: **86112450.1**

(22) Date of filing: **09.09.86**

(51) Int. Cl.⁵: **E03D 5/00, B64D 11/02**

(54) **Aircraft toilet flush valve.**

(30) Priority: **24.09.85 US 779661**

(43) Date of publication of application:
**08.04.87 Bulletin 87/15**

(45) Publication of the grant of the patent:
**23.05.90 Bulletin 90/21**

(84) Designated Contracting States:
**DE FR GB SE**

(56) References cited:
**FR-A- 2 182 354**
**GB-A- 335 450**
**GB-A- 1 317 359**
**US-A- 3 278 153**
**US-A- 3 554 483**
**US-A- 3 710 816**
**US-A- 4 376 314**
**US-A- 4 376 315**

(73) Proprietor: **Monogram Industries, Inc., 50 Kennedy Plaza, Providence Rhode Island 02903-2360(US)**

(72) Inventor: **Rozenblatt, Mike M., 709 35th Street, Manhattan Beach California 90232(US)**
Inventor: **Allen, Jon E., 1223 West 222nd Street, Torrance California 90502(US)**
Inventor: **Jung, Anna M., 116 South Guadalupe, Apt. A, Redondo Beach California 90277(US)**

(74) Representative: **Witte, Alexander, Dr.-Ing., Witte, Weller & Hilgenfeldt Patent- und Rechtsanwälte Augustenstrasse 7, D-7000 Stuttgart 1(DE)**

## Description

The invention is related to a flow control assembly for controlling flow through a drain from a toilet bowl to a waste tank maintained at a partial vacuum, comprising a flexible drain section connected in line in the drain, and a nip mechanism movably connected to said drain section for nipping said flexible drain section shut to stop flow and for dilating said drain section open to enable flow.

The invention, further, relates to a toilet valve assembly for controlling the flow of waste from a toilet bowl to a waste holding tank through a drain, comprising a flexible drain section in line in the drain and a pinch mechanism for movement in a first direction by an actuating force to dilate said flexible drain section to an open position for enabling the flow of waste through the drain, and for movement in a second direction by the actuating force to pinch said flexible drain section to a closed position for stopping flow of waste through the drain, the assembly having, further, an actuator for applying the actuating force in the first and second directions to said pinch mechanism.

The invention, further, relates to a flush valve for opening and closing a drain connecting a toilet bowl to a waste holding tank, comprising a pinch knife assembly having an upper pinch knife on one side of the drain and a lower pinch knife on an opposite side of the drain, the pinch knives being connected by a linkage so that movement of the upper pinch knife away from the lower pinch knife opens the drain, and movement of the upper pinch knife towards the lower pinch knife closes the drain.

A flow control assembly and a toilet valve assembly or flush valve, respectively, of the aforementioned kind are known from US-A 4 376 314.

For many years, aircraft toilet systems have utilized fluid recirculating toilets for disposing of waste. These systems generally comprise a toilet bowl mounted above or connected by a drain to a waste holding tank containing a charge of water. When the toilet is flushed, a pump connected to the tank pumps a volume of water from the tank and passes it through a spray apparatus in the bowl to wash the waste back into the tank with the assistance of gravity. A filter associated with the pump separates the solid waste from the liquid waste in the tank to prevent clogging of the pump and downstream rinse water lines.

In more recent years, vacuum flush systems have been used to forcefully withdraw the waste and rinse water from the bowl and through the drain into the holding tank.

In such systems, the tank is situated below the passenger cabin floor and vented to the atmosphere outside the aircraft, and the toilet bowl is situated inside the pressurized passenger cabin and maintained at cabin pressure. At altitudes generally above 15,000 feet, the difference in pressure between the atmospheric pressure outside the aircraft and the cabin pressure inside the aircraft causes sufficient air flow from the bowl to the tank to remove the waste. At ground level and at altitudes generally below 4570 m (15,000 feet), a vacuum pump may be used to artificially create a vacuum in the tank. Another approach involves eliminating the use of recirculated flush fluid by utilizing fresh rinse water from the potable water supply of the aircraft.

When vacuum flush systems are employed, it is necessary to keep the drain connecting the toilet bowl to the waste holding tank in a closed position, except for a relatively brief period when the toilet is engaged in a waste flushing cycle. If some means were not provided to close the drain and cut off vacuum to the bowl when the toilet is not in a flushing cycle, the cabin of the aircraft where the bowl is situated eventually would suffer an unacceptable reduction in cabin pressure. Moreover, particularly at ground level, the drain must be closed to prevent undesirable waste fumes in the waste holding tank from migrating through the drain and out of the bowl into the passenger cabin.

US-A 4 376 314, mentioned at the outset, describes a vehicular toilet as may be used on board of aircrafts having a vacuum-type waste collection system, as described hereinbefore. This prior art toilet uses a drain line for connecting the toilet bowl with a waste holding tank. In line with the drain line, a pinch valve is arranged for connecting or disconnecting, respectively, the toilet bowl with the waste holding tank in a pressure-tight manner. However, nothing is said in this citation about any means for operating the pinch valve.

In US-A 3 278 153, a double-action pinch tube valve is described having counter-acting pinch knives for closing and opening, respectively, a flexible tube while leaving the tube axis coaxial with the axis of adjoining solid tube sections when the flexible tube section is pinched or dilated, respectively, by means of the pinch knives. For actuating the pinch knives, a solenoid with an armature is used that may be switched either into an extended or a retracted position, respectively. The armature is connected to a linkage which, in turn, is connected to the pinch knives to displace same into a closed position with the flexible tube section pinched or into an open position with the flexible tube section dilated, respectively, when the armature is in the retracted position.

However, this type of pinch tube valve has the disadvantage that closing and opening of the valve is performed in an unsensitive manner by simply energizing or de-energizing the solenoid. If, for example, a solid object is introduced erroneously into the drain line and is positioned within the flexible tube section, then actuating the solenoid would mean that the pinch knives are closed, irrespective of the fact that closing of the flexible tube section is impossible because of the solid object enclosed therein. As the flexible tube section is normally made of an elastic plastic material or of a rubber material, this could result in damaging the flexible tube section when the pinch knives are closed with the full actuating power of the solenoid assembly. This holds true the more when a solid object is provided with sharp edges so that holes or slots may be cut into the flexible tube section when the pinch knives are closed.

Further, another disadvantage of this prior art pinch tube valve is that the opening or closing operation is performed in a digital manner, i.e. the closing and opening action, respectively, is performed withouth any smooth transitions in the pressure, predominating in the flexible tube section, because the pinch knives are rapidly closed or opened under the action of the switching of the solenoid. If the prior art pinch tube valve is used in connection with an aircraft toilet having a vacuum-type waste collection system, a sudden opening or closing of the pinch tube valve may result in shock waves of the air and waste contained in the drain line when the pinch tube valve is closed or opened too rapidly. This, in turn, may result in considerable noise or even in an unproper waste removing action.

Another flush valve that has been proposed for aircraft toilet applications is described in US-A 4 376 315. This vacuum flush valve, presently used in the industry, comprises a flexible diaphragm mounted in a side opening of a vacuum drain line and surrounded by a control pressure chamber. To close the drain, cabin pressure enters the chamber to depress the diaphragm against the drain to a normally closed position. To open the drain during a flushing cycle, vacuum from the waste holding tank and drain enters the chamber to pull the diaphragm away from drain into an open position.

However, the aforementioned vacuum flush valve is also subject to several disadvantages. For example, if a sharp object is dropped into the toilet bowl, the object may hit the diaphragm, occupying a bend in the drain, and possibly rupture it as it rapidly accelerates through the drain. This would disable the toilet and cause a reduction of cabin pressure. In use, flight attendants sometimes use coat hangers and the like to clear a clogged drain. If the diaphragm is part of the bend in the drain line, it could be ruptured. Pressure-operated, flexible diaphragm type flush valves of the aforementioned kind also have vacuum tubes and check valves associated with the drain and control pressure chambers that could become clogged by waste. Furthermore, servicing of the flush valve in the event of valve failure may be difficult without physical handling of the waste that remains trapped in the bowl. Objects caught in the drain which prevent the diaphragm from completely closing the drain could also present a problem.

The same considerations hold true for a vacuum-flush toilet arrangement for aircraft, as described in US-A 4 275 470, also having a diaphragm-type valve arranged in a drain line goose neck bend.

US-A 3 482 267 describes a discharge valve, particularly for water closets, having a cylindrical drain line with an axially extending opening arranged therein. The opening is closed by means of a flexible diaphragm, that may be displaced in a radial direction by means of a plunger-type actuator for closing the valve. Although this prior art valve does not use a goose-neck-type drain line with a diaphragm valve arranged therein, so that solid objects can more easily pass through the drain line when the valve is open, some of the above described disadvantages are also present for this type of prior art discharge valve. If, for example, a solid sharp object is introduced to the drain line and comes to a standstill at the position of the flexible diaphragm, then a closing of the wall would also result in a damage of the diaphragm, because no provisions have been taken to ensure a soft closing or opening of the valve.

Pinch tube valves per se ar well known in the art, e.g. from GB-A 1 317 359, FR-B 2 182 354, US-A 2 810 991, US-A 3 321 172, US-A 3 578 885, and US-A 3 984 080.

However, all of these prior art pinch tube valves cannot be used in an aircraft vacuum-type waste collection toilet system for the reasons mentioned above in connection with the actuating of these valves.

GB-A 335 450 describes a power-operated valve with an electric motor rotating a crank disk which, in turn, axially displaces a rod being connected with a valve element via a spring and a lost motion arrangement.

However, this prior art valve, although performing a smooth closing and opening operation yet exerts the full driving power action on the valve seat when operated cyclically.

Further, this prior art valve is neither intended to be used nor can be used in an aircraft toilet system.

FR-B 2 182 354 describes a motorized valve having an elastic element in a linkage arrangement between a driving motor and the valve with electric circuit means for limiting the actuating force of the valve. However, this prior art system either uses a rotational actuation of the valve with a torsion sensing device or an axial actuating of the valve with a linear displacement sensing device. Therefore, this prior art system is rather complicated and, also, neither intended to be used nor designed to be used in an aircraft toilet system.

It is, therefore, an object of the present invention to provide an aircraft toilet flush valve system of the kind mentioned at the outset of this description allowing smooth and sensitive opening and closing of the flexible drain line section. More specifically, it is an object of the invention to prevent damages of the flexible drain line section when solid and sharp objects are introduced therein. Still more specifically, it is an object of this invention to provide a smooth opening and closing action of the valve so that shock waves of the air and waste contained in the drain line and the associated noise are avoided.

According to the flow control assembly mentioned at the outset, this object is achieved by

a) a drive motor having
an output shaft selectively driven in opposite directions by said drive motor, and
control means for starting and stopping said drive motor, and
b) linkage means connecting said output shaft to said nip mechanism for nipping said flexible drain section shut on shaft motion in one direction and for dilating said flexible drain section open on shaft motion in the opposite direction, said linkage means including

lost motion means for permitting motion of said output shaft over a limited range of travel without opening or shutting of said nip mechanism,

resilient biasing means connecting with said lost motion means for preventing operation of said last motion means until said linkage means encounters a predetermined level or force resisting motion of said nip mechanism, said biasing means having sufficient stiffness relative to the force needed to shut said flexible drain section in the absence of an obstruction that said drain section is nipped fully to the shut condition without operation of said lost motion means, application of force beyond that necessary to fully shut said flexible drain section overcoming said biasing means to enable operation of said lost motion means, and

stop means actuated by said lost motion means and operably connected to said control means for stopping said motor when said linkage means applies a predetermined level of force to said nip mechanism and said lost motion means has travelled a predetermined distance.

According to the toilet valve assembly, mentioned at the outset, the object is achieved by

a) said actuator having
a drive motor connected to a source of power,
an output shaft connected to said drive motor selectively driven in the first and second directions,
a first member connected to said output shaft,
a second member connected to said pinch mechanism, and
a resilient member interposed between said first member and said second member; and

b) switch means actuated by movement of said first member relative to said second member and operably connected to said actuator for connecting and disconnecting power to said motor, said switch means disconnecting power to said motor after said actuator has applied a predetermined level of force to said pinch mechanism and the resilient member has been compressed a predetermined amount.

According to the flush valve, mentioned at the outset, the object is achieved by

a) a first member having an upper end with an enclosure and a lower end connected to said pinch knife assembly for movement with the upper pinch knife;

b) a second member having a lower end retained within the enclosure, said second member being movable a limited distance with respect to said first member;

c) a resilient member within the enclosure of said first member and positioned between the lower end of said second member and said first member;

d) reciprocating means connected to an upper end of said second member for reciprocating said second member in opposite directions, movement of said second member in a first direction pulling said second member, said first member and the upper pinch knife to open the drain, movement of said second member in a second opposite direction pushing said second member against said resilient member, said first member and the upper pinch knife to close the drain; and

e) switch means for actuating and disabling said reciprocating means in response to movement of said second member, said switch means being actuated to disable said reciprocating means by movement of said second member relative to said first member and by application of force to compress said resilient member a predetermined amount.

The present invention, therefore, provides a flush valve for positively opening and closing a drain line connecting a toilet bowl to a waste holding tank under vacuum. The flush valve is located external to the drain line and comprises a pinch knife assembly surrounding a flexible section of the drain and an electromechanical drive mechanism for moving the pinch knife assembly to close the flexible drain section by pinching it or to temporarily open the flexible drain section by retracting away from it. If the flexible drain section is obstructed for some reason, a motor in the drive mechanism automatically is deactivated to prevent motor stall and possible damage to the motor and flush valve. The flush valve, furthermore, is reliable in operation, simple to maintain and relatively inexpensive to manufacture.

The pinch knife assembly included in the flush valve of this invention is well known in the art and comprises an upper pinch knife on one side of the flexible drain section and a lower pinch knife on an opposite side of the flexible drain section. The two pinch knives are connected together by a valve linkage partially surrounding the flexible drain section so that movement of one pinch knife towards or away from the flexible drain section also moves the other pinch knife in the same direction. The upper pinch knife is connected to the electromechanical drive mechanism for moving the pinch knives in unison through the linkage to the open and closed positions.

More specifically, the drive mechanism is connected to the upper pinch knife and comprises a cylinder having a lower end connected to the upper pinch knife and an upper end containing an openended enclosure, within which is positioned a spring and a piston. A lower end of the piston is retained within the enclosure of the cylinder and reciprocated a limited distance within the enclosure by a drive shaft attached to the motor and the piston's upper end. The spring is interposed between the lower end of the piston and the cylinder and functions to take up piston travel when the piston is moved downwardly against the cylinder to compress the pinch knives and pinch the flexible drain section closed. In the event that the flexible drain section is obstructed and cannot be fully closed, although movement of the cylinder will be stopped by the obstructed drain, the piston will go through its full range of travel, compressing the spring and actuating a switch for shutting off the motor. This feature for deactivating the motor when the flexible drain section is obstructed prevents stalling and premature failure of the motor, as well as a possible damage of the flush valve.

In the event that the flush valve becomes inoperative for any reason, a manually operated shut-off valve is provided downstream of the flush valve for closing the drain line.

Other features and advantages of the present invention will become apparent from the following detailed description, taken in conjunction with the accompanying drawings, which illustrate, by way of example, the principles of the invention.

The accompanying drawings illustrate the invention. In such drawings:

Fig. 1 is a schematic view of an aircraft toilet flush valve embodying the novel features of the invention and illustrated in association with the drain line connecting a toilet bowl to a waste holding tank under vacuum;

Fig. 2 is a side view of the flush valve, taken substantially along line II–II of Fig. 1, showing a flexible section of the drain line in a closed position;

Fig. 3 is a cross-sectional view of the flush valve taken substantially along line III–III of Fig. 2;

Fig. 4 is a side view of the flush valve, similar to that of Fig. 2, showing the flexible drain section in an open position;

Fig. 5 is a cross-sectional view taken substantially along line V–V of Fig. 4.

As shown in the exemplary drawings, the present invention is embodied in an aircraft toilet flush valve, referred to generally by the reference numeral 10, for use in opening and closing a drain line 12 connecting a toilet bowl 14 to a waste holding tank 16 under vacuum. The flush valve 10 is provided with a drive mechanism 18 for moving a pinch mechanism to positively open and close a flexible section 20 of the drain line 12 to allow vacuum from the waste holding tank 16 to forcefully withdraw the waste from the toilet bowl 14. The drive mechanism 18 is provided with means for disconnecting power to a motor 22 in the drive mechanism 18 in the event that the flexible drain section 20 is obstructed and the drive mechanism 18 is unable to move the pinch mechanism to the position completely closing the flexible drain section 20.

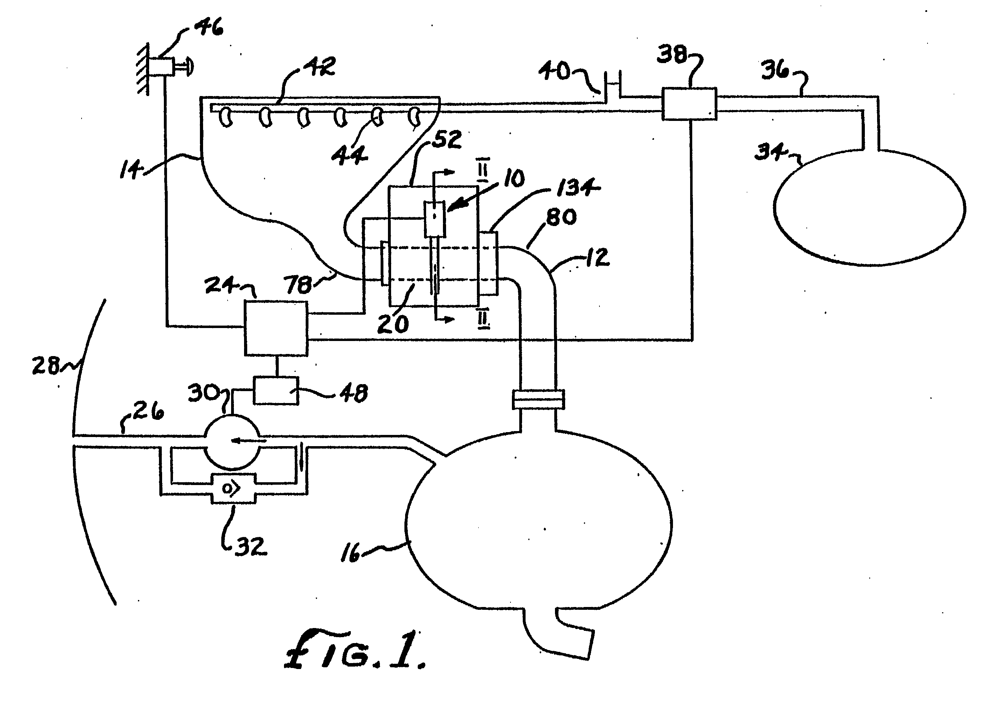

As illustrated schematically in Fig. 1, the flush valve 10 is shown connected to the drain line 12 of a vacuum flush toilet system suitable for use in various modes of transportation, for example, aircraft. The system includes a toilet control module 24, and the toilet bowl 14 connected by the drain line 12 to the waste holding tank 16. The toilet bowl 14 is located in the pressurized passenger cabin of the aircraft. The waste holding tank 16 preferably is situated below the passenger cabin floor of the aircraft and at a location that permits access to the tank 16 for servicing and emptying after each flight, or as required. The tank 16 also is vented through a vent line 26 to the outside surface 28 of the aircraft. Thus, at sufficiently high altitudes, the difference in pressure between the atmospheric pressure outside the aircraft where the tank 16 is vented, and the cabin pressure inside the aircraft where the toilet bowl 14 is located, creates a vacuum causing air to flow in a direction from the bowl 14 to the tank 16. At altitudes generally above 4570 m (15,000 feet), the pressure differential normally is great enough to forcefully withdraw the contents from the bowl 14 through the drain line 12 and into the tank 16. At ground level and at altitudes generally below 4570 m (15,000 feet), a vacuum pump 30 in the vent line 26 may be used to artificially create or supplement the vacuum in the tank 16 sufficient to withdraw the waste. When the vacuum pump 30 is used, a check valve 34 is provided in the vent line 26 to prevent loss of vacuum.

Rinse water for the toilet bowl 14 is provided from a potable water supply tank 34 of the aircraft through a water supply line 36. Passage of rinse water from the potable water tank 34 is controlled by a solenoid valve 38 in the water line 36. As the rinse water passes through the water supply line 36, it goes through a vacuum breaker 40 and reaches the bowl 14 where it is directed to a spray manifold 42 in the upper portion of the bowl 14 and ejected through a plurality of spray nozzles 44 spaced apart on the spray manifold 42. In the preferred embodiment, the spray nozzles 44 are oriented at an angle with respect to the spray manifold 42 and the sides of the bowl 14 so that the water emitted from the spray nozzles 44 swirls around the sides of the bowl 14 and removes any waste or other matter in the bowl 14. During a flush cycle, the rinse water and waste are forcefully drawn through the drain line 12 and into the waste holding tank 16.

Sequencing of the flush cycle is controlled by the toilet control module 24, which is activated by a flush switch 46 depressed by an occupant. The toilet control module 24 sends a first signal for operating a vacuum blower control module 48 to ensure that sufficient vacuum exists in the tank 16. If the altitude is below approximately 15,000 feet, the vacuum pump 30 is operated to bring the vacuum up to an acceptable level. A second signal also is sent to the solenoid valve 38 for causing a volume of water to pass from the water supply line 36 and through the vacuum breaker 46 into the bowl 14. Another signal simultaneously is sent to the flush valve 10 for opening the flush valve 10 for a predetermined period and evacuating waste and rinse water from the bowl 14. After the flush valve 10 closes, the toilet control module 24 sends another signal to the vacuum blower control module 48 for shutting off the vacuum pump 30. The toilet is then ready for the next flushing cycle.

In the vacuum flush toilet described above, it is necessary to maintain the drain line 12 connecting the toilet bowl 14 to the waste holding tank 16 in a normally closed position, except during the relatively brief period when the toilet is engaged in a waste flushing cycle. If the drain line 12 were not kept in a closed position, the vacuum in the tank 16 constantly would be withdrawing air from the cabin of the aircraft, eventually causing an unacceptable reduction of cabin pressure. In accordance with the present invention, as described below, the flush valve 10 positively opens the flexible drain section 20 for a brief period to permit vacuum to withdraw the waste and then positively closes the flexible drain section 20 to prevent loss of cabin pressure. At ground level, were loss of cabin pressure is not a concern, the closed valve 10 prevents undesirable fumes in the waste holding tank 16 from migrating through the drain line 12 and entering the unpressurized cabin through the bowl 14.

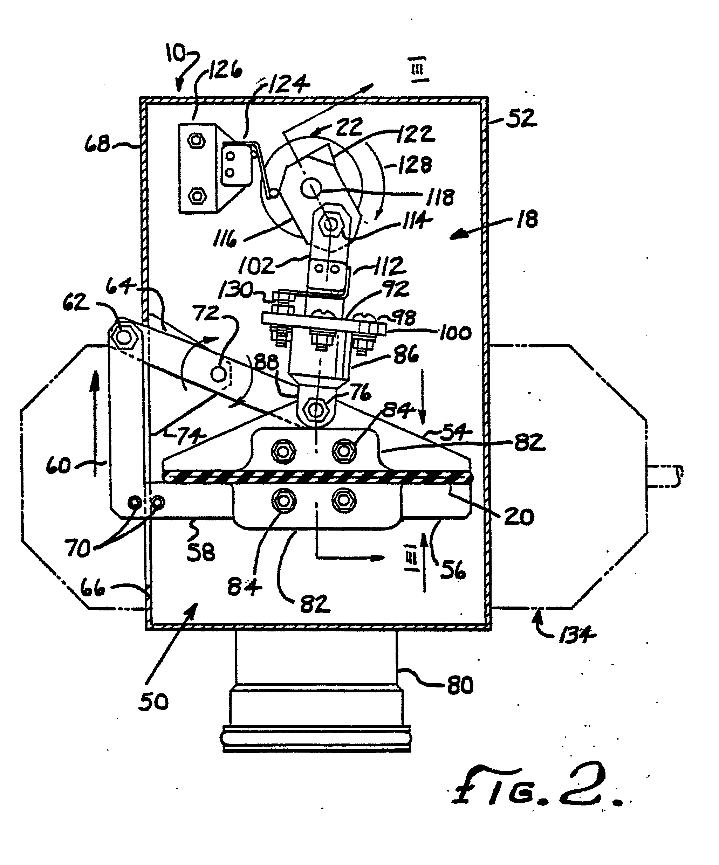

As shown best in Figs. 2 to 5, the flush valve 10 of this invention is located external to the drain line 12 and comprises a pinch knife assembly 50 surrounding the flexible drain section 20 and the electromechanical drive mechanism 18 for moving the pinch knife assembly 50 to open and close the flexible drain section 20. The flush valve 10 is then closed within a housing 52 to prevent possible corrosion or damage to the valve 10.

The pinch knife assembly or pinch mechanism 50 for opening and closing the flexible drain section 20 includes an upper pinch knife 54 positioned on one side of the flexible drain section 20 and a lower pinch knife 56 positioned on an opposite side of the flexible drain section 20. The lower pinch knife 56 is substantially L-shaped, having a horizontal leg 58 for engaging the flexible drain section 20 and a vertical leg 60 for pivotal connection by a fastener 62 to one end of a pivot arm 64. The horizontal leg 58 of the lower pinch knife 56 extends through a slot 66 in a vertical side wall 68 of the housing 52 and has guide pins 70 projecting from the horizontal leg 58 on opposite sides of the side wall 68 for slideably engaging the side wall 68 and cooperating with it to provide vertical movement of the lower pinch knife 56 relative to the side wall 68. The pivot arm 64, having the one end pivotably connected to the vertical leg 60, also extends through the slot 66 in the housing 52 and is pivotally connected by a pivot pin 72, at about the midpoint of the arm 64, to a bracket 74 extending inwardly into the housing 52. The other end of the pivot arm 64 is pivotally connected by a fastener 76 to the upper pinch knife 54, shown as having a generally triangular configuration, although it may be of another suitable configuration as desired. Through the arrangement of the pinch knife assembly 50 described above, movement of the upper pinch knife 54 towards the flexible drain section 20 simultaneously moves the lower pinch knife 56 towards the flexible drain section 20, and movement of the upper pinch knife 54 away from the flexible drain section 20 also moves the lower pinch knife 56 away from the flexible drain section 20. The pinch knife assembly 50 described above for opening and closing the flexible drain section is well known in the art and is disclosed, for example, in US-A 3 278 153.

The flexible drain section 20 in the preferred embodiment is substantially circular in cross-section and is made of a flexible material, for example, a resilient elastomere such as rubber. The flexible drain section 20 is pinched or nipped shut and pulled apart to an open position by the flush valve 10 of this invention. Thus, sections 78 and 80 of the drain line 12 on either side of the flexible drain section 20 may be constructed from metal, metal alloys, plastic or other rigid material. The pinch knife assembly 50 and housing 52 may be constructed from rigid materials, such as metal, metal alloys, hard plastic, or other suitable materials that preferably are resistant to corrosion.

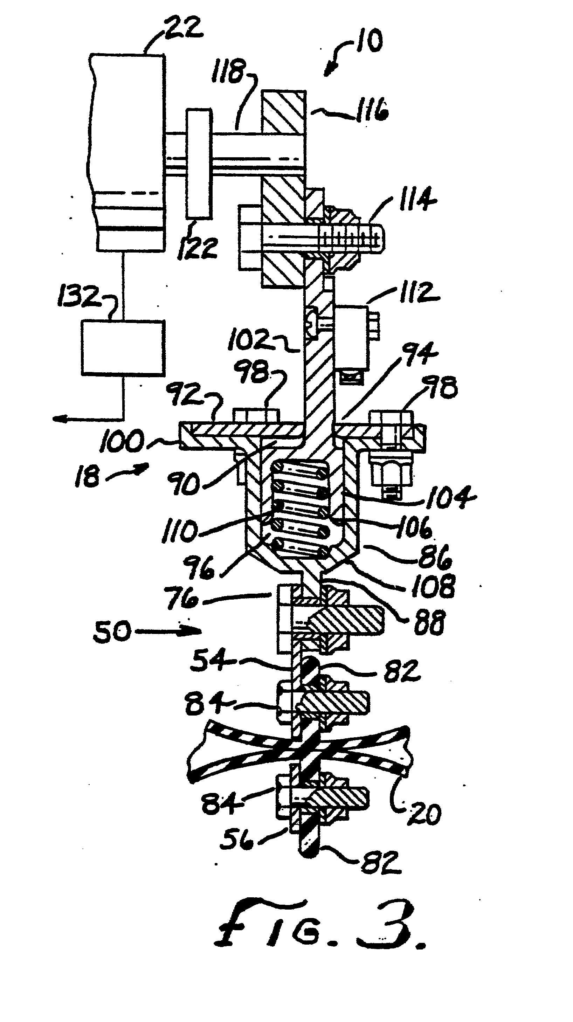

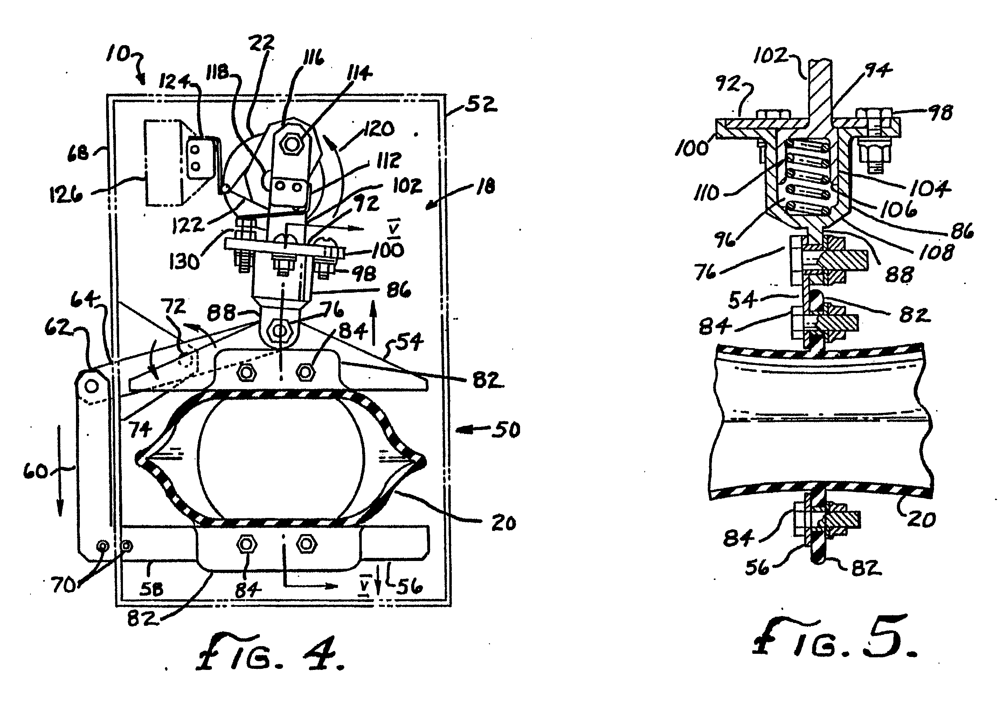

The upper and lower pinch knives 54 and 56 are rigidly connected to their respective opposed sides of the flexible drain section 20 by attachment to ribs 82 extending radially outwardly on opposite sides of the flexible drain section 20 adjacent to the pinch knives 54, 56. The ribs 82 are integrally moulded as part of the flexible drain section 20 and are secured to the upper and lower pinch knives 54, 56 by fasteners 84 inserted through aligned holes in the ribs 82 and pinch knives 54, 56, as illustrated in Figs. 3 and 5. Thus, downward movement of the upper pinch knife 54 by the electromechanical drive mechanism 18 positively moves the pinch knives 54, 56 toward each other and closes the flexible drain section 20 by pinching or nipping it shut, as shown in Fig. 3, and upward movement of the upper pinch knife 54 positively retracts the pinch knives 54, 56 away from each other and temporarily pulls open the flexible drain section 20 into an opened configuration, as shown in Fig. 5.

Referring again to Figs. 3 and 5, the electromechanical drive mechanism 18 comprises a cylinder 86 having an ear 88 at its lower end for pivotal connection by the fastener 76 to the upper pinch knife 55. The upper end of the cylinder 86 contains an axially upwardly facing opening 90 that is covered by a horizontal cover plate 92 having an offset slot 94 for permitting access to the opening 90. Together, the cover plate 92 and opening 90 define an enclosure 96 within the cylinder 86. The cover plate 92 may be secured to the cylinder 86 by a plurality of conventional fasteners 98 inserted through aligned holes in the outer periphery of the cover plate 92 and a shoulder 100 on the cylinder 86.

A piston 102 is received through slots 94 and has an enlarged lower end enclosed and slideably retained within the cylinder enclosure 96. The enlarged lower end of the piston 102 has a configuration resembling an inverted casing 104 with a downwardly facing opening 106. The casing 104 preferably is integrally formed with the piston 102 and is capable of reciprocating a limited vertical or axial distance within the enclosure 96. That is, downward vertical movement of the casing 104 is limited by a bottom wall 108 of the cylinder 86, and upward vertical movement of the casing 104 is limited by the cover plate 92. A spring 110 is interposed within the enclosure 96 between the cylinder bottom wall 108 and the piston casing 104 to absorb downward piston travel when closing the flexible drain section 20. As explained further below, when the flexible drain section 20 is fully closed or is obstructed and prevented from fully closing, the piston 102 compresses the spring 110 and activates a closed position switch 112 on the piston 102 for deactivating the motor 22 in the drive mechanism 18.

The upper end of the piston 102 is pivotally connected by a fastener 114 to one end of a link 116, with the other end of the link 116 being rigidly attached to a drive shaft 118 of the motor 22. The link 116 may be attached to the drive shaft 118 and the piston 102 in an offset position to provide an adjustable connection between the drive shaft 118 and piston 102.

Operation of the flush valve 10 is as follows. As shown by the arrow 120 in Fig. 4, rotation of the drive shaft 118 in a first direction moves the piston 102 vertically upward, causing the piston casing 104 to contact the cover plate 90 and pulling the cylinder 86 in the vertically upward direction. This movement, in turn, pulls the upper pinch knife 54 vertically upwardly, retracting the two pinch knives 54, 56 and pulling the flexible drain section 20 to a temporarily open position. When the flexible drain section 20 reaches a fully opened position, a cam 122 mounted on the drive shaft 118 activates an open position switch 124 mounted within the housing 52 on a bracket 126. The open position switch 124 when activated sends a signal to the toilet control module 24 to reverse the direction of the drive shaft 118. This enables rotation of the drive shaft 118 in a second direction opposite the first direction. Thus, as shown by the arrow 128 in Fig. 2, rotation of the drive shaft 118 in the second direction moves the piston 102 vertically downward, causing the piston casing 104 to contact the spring 110 and exert a corresponding downward force upon it and the cylinder 86. In the preferred embodiment, the spring 110 has a spring force that is greater than the force necessary to nip the flexible drain section 20 shut. Thus, the cylinder 86 will be moved vertically downwardly substantially without compression of the spring 110 as the pinch knives 54, 56 are closing. This movement, in turn, pushes the upper pinch knife 54 vertically downward, moving the two pinch knives 54, 56 towards each other and nipping for pinching the drain section 20 to a normally closed position.

When the flexible drain section 20 finally has been pinched closed, the piston casing 104 continues to apply a vertically downward force to the spring 110 until the piston force overcomes the spring force and compresses the spring 110. In this way, the spring 110, piston 104, and cylinder 86 combine to provide a lost motion means within the drive mechanism 18. After the piston 102 has applied a certain amount of closing force to the pinch knife assembly 50 and compressed the spring 110 a predetermined distance, the closed position switch 112 mounted on the piston 102 is activated by movement against a fixed contact 130 on the cylinder 86 to disconnect power to the motor 22. As shown in Figs. 2 and 4, the contact may comprise an internally threaded, adjustable nut mounted on an externally threaded shank of one of the fasteners 98 securing the cover plate 92 to the cylinder 86. The adjustable nut can be selectively threaded up or down to adjust the distance which the piston 102 must travel before the closed position switch 112 is activated to disconnect power to the motor 22. This, of course, adjusts the amount of force exerted by the pinch knives 54, 56 against the flexible drain section 20.

The components of the drive mechanism 18, such as the cylinder 86, spring 110, piston 102, pivot arm 64, and cam 122 may be constructed from metallic materials or other suitable materials. These materials preferably are light-weight and resistant to corrosion.

It will be appreciated that the drive mechanism 18 will be deactivated whenever the downward piston force overcomes the spring force, thus compressing the spring 110 and activating the closed position switch 112 to disconnect power to the motor 22. In the preferred embodiment, the drive mechanism 18 is not disabled until it has exerted a sufficient force so that the flexible drain section 20 is pinched completely closed by the pinch knives 54 and 56. When the flexible drain section 20 is nipped shut, the clamping force of the pinch knives 54, 56 against the flexible drain section 20 provides a substantially tight seal to prevent vacuum in the waste holding tank 16 from withdrawing air from the pressurized cabin. At ground level, the valve 10 further prevents undesirable fumes in the waste holding tank 16 from migrating through the drain line 12 and out of the toilet bowl 14 into the passenger cabin.

The motor 22 for rotating the drive shaft 118 preferably has a motor control 132, shown schematically in Fig. 3, for adjusting the rotational speed of the drive shaft 118. Thus, the motor speed can be adjusted to open the valve 10 by retracting the pinch knives 54 and 56 at a specified rate that will reduce or eliminate explosive sounds typically created by the vacuum rushing through the drain line 12 upon opening of the valve 10. Thus adjustment of the motor speed advantageously reduces the noise level within the lavatory compartment, yet allows substantially immediate evacuation of the waste during flushing. The motor 22 also may be provided with dynamic breaking means in the motor control 132 to counteract motor inertia and enable the drive mechanism 18 to stop in the same position after each flush cycle. If the motor 22 is a D.C. motor, as in the preferred embodiment, the dynamic breaking means may comprise a connector for connecting the positive and negative terminal of the motor 22 to each other in response to a signal received from the closed position switch 112.

Another advantage of the flush valve 10 is that the flexible drain section 20 in the preferred embodiment does not occupy a bend in the drain line 12 connecting the bowl 14 to the tank 16. Thus, if sharp objects are deposited into the bowl 14, they are more likely to flow through and not rupture the flexible drain section 20 upon rapid acceleration through the drain line 12 by the vacuum.

A further advantage of the flush valve 10 is that the drive mechanism 18 is electromechanically operated and, therefore, is totally independent from the vacuum and waste flowing through the drain line 12. Waste toilet paper, and other matter cannot enter internal components of the valve to cause corrosion or failure. Moreover, because the valve 10 is external to the drain line 12, the valve 10 is easily serviceable and the physical handling of waste is eliminated unless, of course, the drain itself requires servicing.

A still further advantage of the flush valve 10 is that it positively opens the flexible drain section 20 to its maximum extent and permits substantially unobstructed flow of waste through the drain line 12. Because the integral ribs 82 of the flexible drain section 20 are attached to the pinch knives 54 and 56, the ribs 82 are positively pulled apart to open the flexible drain section 20, and the possibility that the flexible drain section 20 may open only partially is avoided.

In the event that the flush valve 10 or toilet bowl 14 become inoperative for any reason, it may be necessary to isolate the inoperative toilet for servicing, while enabling continued normal operation of other toilets in the system. This may be accomplished by closing the drain line 12 downstream from the flush valve 10. Accordingly, a manually operated shut-off valve 134 is provided downstream of the flush valve 10, as shown schematically in Figs. 1 and 2.

While a particular form of the invention has been illustrated and described, it will be apparent that various modifications can be made without departing from the scope of the invention as defined by the appended claims.

## Claims

1. A flow control assembly for controlling flow through a drain (12) from a toilet bowl (14) to a waste tank (16) maintained at a partial vacuum, comprising a flexible drain section (20) connected in line in the drain (12) and a nip mechanism (50 through 76, 82, 84) movably connected to said drain section (20) for nipping said flexible drain section (20) shut to stop flow and for dilating said drain section (20) open to enable flow, characterized by:

   a) a drive motor (22) having

   an output shaft (118) selectively driven in opposite directions by said drive motor (22), and control means (132) for starting and stopping said drive motor (22); and

   b) linkage means (86 through 116, 122 through 132) connecting said output shaft (118) to said nip mechanism (50 through 76, 82, 84) for nipping said flexible drain section (20) shut on shaft motion in one direction and for dilating said flexible drain section (20) open on shaft motion in the opposite direction, said linkage means (86 through 116, 122 through 132) including

   lost motion means (86, 90 through 108) for permitting motion of said output shaft (118) over a limited range of travel without opening or shutting of said nip mechanism (50 through 76, 82, 84),

   resilient biasing means (110) connected with said lost motion means (86, 90 through 108) for preventing operation of said lost motion means (86, 90 through 108) until said linkage means (116) encounters a predetermined level of force resisting motion of said nip mechanism (50 through 76, 82, 84), said biasing means (110) having sufficient stiffness relative to the force needed to shut said flexible drain section (20) in the absence of an obstruction that said drain section (20) is nipped fully to the shut condition without operation of said lost motion means (86, 90 through 108), application of force beyond that necessary to fully shut said flexible drain section (20) overcoming said biasing means (110) to enable operation of said lost motion means (86, 90 through 108), and stop means (112, 130) actuated by said lost motion means (86, 90 through 108) and operably connected to said control means (132) for stopping said motor (22) when said linkage means (116) applies a predetermined level of force to said nip mechanism (50 through 76, 82, 84) and said lost motion means (86, 90 through 108) has travelled a predetermined distance.

2. The flow control assembly of claim 1, characterized in that said nip mechanism (50 through 76, 82, 84) comprises a pinch knife assembly (50) having an upper pinch knife (54) on one side of said flexible drain section (20) and a lower pinch knife (56) on an opposite side of said flexible drain section (20), the pinch knives (54, 56) being connected together by a pivot arm (64) so that movement of the upper pinch knife (54) in the one direction towards the lower pinch knife (56) nips said flexible drain section (20) shut, and movement of the upper pinch knife (54) in the opposite direction away from the lower pinch knife (56) opens said flexible drain section (20).

3. The flow control assembly of claim 1, characterized in that said linkage (116) for connecting said output shaft (118) to said nip mechanism (50 through 76, 82, 84) comprises:

   a cylinder (86) having one end connected to said nip mechanism (50 through 76, 82, 84) and the other end having an enclosure (96);

   a piston (102) having one end connected to said output shaft (118) and the other end being retained and reciprocable a limited distance within the enclosure (96) of said cylinder (86); and a spring (110) interposed within the enclosure (96) of said cylinder (86) between said cylinder (86) and the other end of said piston (102), said spring (110) being in a compressed condition when said flexible drain section (20) is closed,

   motion of the output shaft (118) in the one direction pushing said piston (102) against said spring (110) and said cylinder (86) and moving said nip mechanism (50 through 76, 82, 84) to close said flexible drain section (20), and motion of the output shaft (118) in the opposite direction pulling said cylinder (86) away from the drain (12) and moving said nip mechanism (50 through 76, 82, 84) to open said flexible drain section (20).

4. The flow control assembly of claim 3, characterized in that said spring (110) has a spring force greater than the force necessary to close said flexible drain section (20) in the absence of an obstruction.

5. The flow control assembly of claim 1, characterized in that said resilient biasing means is a spring (110) having a spring force that is greater than the force necessary to close said flexible drain section (20) in the absence of an obstruction.

6. The flow control assembly of claim 1, characterized in that said control means (132) includes means connected to said drive motor (22) for adjusting the rotational speed of said output shaft (118) to enable said nip mechanism (50 through 76, 82, 84) to open and close said flexible drain section (20) at different rates.

7. The flow control assembly of claim 1, characterized in that said drive motor (22) is a D.C. motor and said control means (132) includes means for connecting the positive and negative terminals of said drive motor (22) to provide dynamic breaking to counteract motor inertia when said stop means (112, 130) stops said drive motor (22).

8. A toilet valve assembly for controlling the flow of waste from a toilet bowl (14) to a waste holding tank (16) through a drain (12), comprising a flexible drain section (20) in line in the drain (12) and a pinch mechanism (50 through 76, 82, 84) for movement in a first direction by an actuating force to dilate said flexible drain section (20) to an open position for enabling the flow of waste through the drain (12), and for movement in a second direction by the actuating force to pinch said flexible drain section (20) to a closed position for stopping the flow of waste through the drain (12), the assembly having, further, an actuator (86 through 116, 122 through 132) for applying the actuating force in the first and second directions to said pinch mechanism (50 through 76, 82, 84), characterized by:

a) said actuator (86 through 116, 122 through 132) having
   a drive motor (22) connected to a source of power,
   an output shaft (118) connected to said drive motor (22) selectively driven in the first and second direction,
   a first member (102, 114, 116) connected to said output shaft (118),
   a second member (76, 86) connected to said pinch mechanism (50 through 76, 82, 84) and
   a resilient member (110) interposed between said first member (102, 114, 116) and said second member (76, 86); and

b) switch means (112) actuated by movement of said first member (102, 114, 116) relative to said second member (76, 86) and operably connected to said actuator (86 through 116, 122 through 132) for connecting and disconnecting power to said motor (22), said switch means (112) disconnecting power to said motor (22) after said actuator (86 through 116, 122 through 132) has applied a predetermined level of force to said pinch mechanism (50 through 76, 82, 84) and the resilient member (110) has been compressed a predetermined amount.

9. A flush valve (10) for opening and closing a drain (12) connecting a toilet bowl (14) to a waste holding tank (16), comprising a pinch knife assembly (50) having an upper pinch knife (54) on one side of the drain (12) and a lower pinch knife (56) on an opposite side of the drain (12), the pinch knives (54, 56) being connected by a linkage so that movement of the upper pinch knife (54) away from the lower pinch knife (56) opens the drain (12), and movement of the upper pinch knife (54) towards the lower pinch knife (56) closes the drain (12), characterized by:

a) a first member (86) having an upper end with an enclosure (96) and a lower end (88) connected to said pinch knife assembly (50) for movement with the upper pinch knife (54);

b) a second member (102) having a lower end (104) retained within the enclosure (96), said second member (102) being movable a limited distance with respect to said first member (86);

c) a resilient member (110) within the enclosure (96) of said first member (86) and positioned between the lower end (104) of said second member (102) and said first member (86);

d) reciprocating means (22, 116, 118) connected to an upper end (114) of said second member (102) for reciprocating said second member (102) in opposite directions, movement of said second member (102) in a first direction pulling said second member (102), said first member (86) and the upper pinch knife (54) to open the drain (12), movement of said second member (102) in a second opposite direction pushing said second member (102) against said resilient member (110), said first member (86) and the upper pinch knife (54) to close the drain (12); and

e) switch means (112, 132) for actuating and disabling said reciprocating means (22, 116, 118) in response to movement of said second member (102), said switch means (112, 132) being actuated to disable said reciprocating means (22, 116, 118) by movement of said second member (102) relative to said first member (86) and by application of force to compress said resilient member (110) a predetermined amount.

**Patentansprüche**

1. Abfluß-Einstellvorrichtung zum Einstellen des Abflusses durch ein Abflußrohr (12) einer Toilettenschüssel (14) zu einem unter teilweisem Vakuum gehaltenem Fäkalientank (16), mit einem biegsamen Abflußrohr-Abschnitt (20), der in Reihe mit dem Abflußrohr (12) angeordnet ist und mit einer Klemmvorrichtung (50 bis 76, 82, 84), die beweglich mit dem Abflußrohr-Abschnitt (20) verbunden ist, um einerseits den biegsamen Abflußrohr-Abschnitt (20) durch Klemmen zu verschließen und damit den Abfluß zu unterbrechen und andererseits den Abflußrohr-Abschnitt (20) aufzuweiten, um einen Abfluß zu ermöglichen, gekennzeichnet durch:

a) einen Antriebsmotor (22) mit
   einer Ausgangswelle (118), die wahlweise in entgegengesetzten Drehrichtungen mittels des Antriebsmotors (22) antreibbar ist und
   Steuermitteln (132) zum Anfahren und Anhalten des Antriebsmotors (22); und

b) Verbindungsmitteln (86 bis 116, 122 bis 132) zum Verbinden der Ausgangswelle (118) mit der Klemmvorrichtung (50 bis 76, 82, 84) zum Abklemmen des biegsamen Abflußrohr-Abschnittes (20) in eine Schließstellung bei Drehung der Welle in eine Richtung und zum Aufweiten des biegsamen Abflußrohr-Abschnittes (20) in eine Offenstellung bei Drehung der Welle in die entgegengesetzte Richtung, wobei die Verbindungsmittel (86 bis 116, 122 bis 132) umfassen:

Hysteresemittel (86, 90 bis 108), die eine Drehung der Ausgangswelle (118) über einen begrenzten Drehbereich ohne ein Öffnen oder ein Verschließen der Klemmvorrichtung (50 bis 76, 82, 84) gestatten,

elastische Vorspannmittel (110), die mit den Hysteresemitteln (86, 90 bis 108) verbunden sind, um ein Wirksamwerden der Hysteresemittel (86, 90 bis 108) zu verhindern, bis die Verbindungsmittel (116) einen vorbestimmten Betrag einer Widerstandskraft der Klemmvorrichtung (50 bis 76, 82, 84) erfahren, wobei die elastischen Vorspannmittel (110) eine ausreichende Steifigkeit bezogen auf die Kraft haben, die benötigt wird, um den biegsamen Abflußrohr-Abschnitt (20) in Abwesenheit eines Hindernisses zu verschließen, so daß der Abflußrohr-Abschnitt (20) vollkommen in eine Schließstellung zugeklemmt werden kann, ohne daß die Hysteresemittel (86, 90 bis 108) wirksam werden, wobei ein Aufbringen von Kraft jenseits des Betrages, der erforderlich ist, um den biegsamen Abflußrohr-Abschnitt (20) vollkommen zu verschließen, die Vorspannmittel (110) überwindet, um ein Wirksamwerden der Hysteresemittel (86, 90 bis 108) zu ermöglichen, wobei Anhaltemittel (112, 130) durch die Hysteresemittel (86, 90 bis 108) betätigt werden und in Wirkungsverbindung mit den Steuermitteln (132) stehen, um den Motor (22) anzuhalten, wenn die Verbindungsmittel (116) einen vorbestimmten Betrag an Kraft auf die Klemmvorrichtung (50 bis 76, 82, 84) ausüben und die Hysteresemittel (86, 90 bis 108) sich um einen vorbestimmten Weg bewegt haben.

2. Abflußrohr-Einstellvorrichtung nach Anspruch 1, dadurch gekennzeichnet, daß die Klemmvorrichtung (50 bis 76, 82, 84) eine Klemmbalkenanordnung (50) mit einem oberen Klemmbalken (54) auf einer Seite des biegsamen Abflußrohr-Abschnittes (20) und einem unteren Klemmbalken (56) auf der gegenüberliegenden Seite des biegsamen Abflußrohr-Abschnittes (20) umfassen, wobei die Klemmbalken (54, 56) miteinander über einen Schwenkarm (64) verbunden sind, so daß eine Bewegung des oberen Klemmbalkens (54) in der einen Richtung auf den unteren Klemmbalken (56) zu den biegsamen Abflußrohr-Abschnitt (20) zuklemmt, während eine Bewegung des oberen Klemmbalkens (54) in die entgegengesetzte Richtung von dem unteren Klemmbalken (56) weg den biegsamen Abflußrohr-Abschnitt (20) öffnet.

3. Abflußrohr-Einstellvorrichtung nach Anspruch 1, dadurch gekennzeichnet, daß die Verbindung (160) zum Verbinden der Ausgangswelle (118) mit der Klemmvorrichtung (50 bis 76, 82, 84) umfaßt:

einen Zylinder (86), dessen eines Ende mit der Klemmvorrichtung (50 bis 76, 82, 84) verbunden ist und dessen anderes Ende einen Hohlraum (96) aufweist;

einen Kolben (102), dessen eines Ende mit der Ausgangswelle (118) verbunden ist und dessen anderes Ende im Hohlraum (96) des Zylinders (86) aufgenommen und dort um einen begrenzten Weg hin- und herbewegbar ist; und eine Feder (110), die zwischen dem Hohlraum (96) des Zylinders (86) zwischen dem Zylinder (86) und dem anderen Ende des Kolbens (102) angeordnet ist, wobei die Feder (110) sich in einem zusammengedrückten Zustand befindet, wenn der biegsame Abflußrohr-Abschnitt (20) verschlossen ist,

wobei eine Bewegung der Ausgangswelle (118) in einer Drehrichtung den Kolben (102) gegen die Feder (110) und den Zylinder (86) drückt und die Klemmvorrichtung (50 bis 76, 82, 84) bewegt, um den biegsamen Abflußrohr-Abschnitt (20) zu verschließen und andererseits eine Bewegung der Ausgangswelle (118) in die entgegengesetzte Drehrichtung den Zylinder (86) vom Abflußrohr (12) weg zieht und die Klemmvorrichtung (50 bis 76, 82, 84) bewegt, um den biegsamen Abflußrohr-Abschnitt (20) zu öffnen.

4. Abflußrohr-Einstellvorrichtung nach Anspruch 3, dadurch gekennzeichnet, daß die Feder (110) eine Federkraft hat, die größer ist als die Kraft, die erforderlich ist, um den biegsamen Abflußrohr-Abschnitt (20) in Abwesenheit eines Hindernisses zu verschließen.

5. Abflußrohr-Einstellvorrichtung nach Anspruch 1, dadurch gekennzeichnet, daß die elastischen Vorspannmittel aus einer Feder (110) bestehen, deren Federkraft größer ist als die Kraft, die erforderlich ist, um den biegsamen Abflußrohr-Abschnitt (20) in Abwesenheit eines Hindernisses zu verschließen.

6. Abflußrohr-Einstellvorrichtung nach Anspruch 1, dadurch gekennzeichnet, daß die Steuermittel (132) mit dem Antriebsmotor (22) verbundene Mittel zum Einstellen der Drehgeschwindigkeit der Ausgangswelle (118) umfassen, um zu ermöglichen, daß die Klemmvorrichtung (50 bis 76, 82, 84) den biegsamen Abflußrohr-Abschnitt (20) mit unterschiedlichen Geschwindigkeiten öffnet oder schließt.

7. Abflußrohr-Einstellvorrichtung nach Anspruch 1, dadurch gekennzeichnet, daß der Antriebsmotor (22) ein Gleichstrommotor ist und daß die Steuermittel (132) Mittel zum Verbinden der positiven und negativen Anschlüsse des Antriebsmotors (22) zum Erzeugen einer dynamischen Bremsung umfassen, um dem Trägheitsmoment des Motors entgegenzuwirken, wenn die Anhaltemittel (112, 130) den Antriebsmotor (22) anhalten.

8. Toiletten-Spülklappen-Einrichtung zum Einstellen des Abflusses von Fäkalien von einer Toilettenschüssel (14) zu einem Fäkalien-Speichertank (16) durch ein Abflußrohr (12), mit einem biegsamen Abflußrohr-Abschnitt (20) in Reihe mit dem Abflußrohr (12) und mit einer Klemmvorrichtung (50 bis 76, 82, 84) zum Bewegen in einer ersten Richtung durch eine Betätigungskraft, um den biegsamen Abflußrohr-Abschnitt in einer Offenposition aufzuweiten, damit die Fäkalien durch das Abflußrohr (12) abfließen können, und zum Bewegen in eine zweite Richtung mittels einer Betätigungskraft, um den biegsamen Abflußrohr-Abschnitt (20) in eine verschlossene Stellung abzuklemmen, so daß der Abfluß der Fäkalien durch das Abflußrohr (12) unterbrochen wird, wobei die Einrichtung ferner eine Betätigungsvorrichtung (86 bis 116, 122 bis 132) umfaßt, zum Aufbringen der Betätigungskraft in der ersten und der zweiten Richtung auf die Klemmvorrichtung (50 bis 76, 82, 84), dadurch gekennzeichnet, daß

a) die Betätigungsvorrichtung (86 bis 116, 122 bis 132) umfaßt:

einen an eine Versorgungsquelle angeschlossenen Antriebsmotor (22),

eine mit dem Antriebsmotor (22) verbundene Ausgangswelle (118), die wahlweise in der ersten und der zweiten Richtung betreibbar ist, ein erstes, mit der Ausgangswelle (118) verbundenes Glied (102, 114, 116),

ein zweites, mit der Klemmvorrichtung (50 bis 76, 82, 84) verbundenes Glied und ein zwischen dem ersten Glied (102, 114, 116) und dem zweiten Glied (26, 86) angeordnetes elastisches Glied; und

b) Schaltmittel (112), die bei einer Bewegung des ersten Gliedes (102, 114, 116) relativ zum zweiten Glied (76, 86) betätigt werden und in Wirkverbindung stehen mit der Betätigungsvorrichtung (86 bis 116, 122 bis 132), zum Anschließen oder Abtrennen von Versorgungsleistung an den Motor (22), wobei die Schaltmittel (112) den Motor (22) von der Versorgungsleistung trennen, wenn die Betätigungsvorrichtung (86 bis 116, 122 bis 132) ein vorbestimmtes Ausmaß an Kraft auf die Klemmvorrichtung (50 bis 76, 82, 84) ausgeübt hat und das elastische Glied (110) um einen vorbestimmten Betrag zusammengedrückt wurde.

9. Spülklappe (10) zum Öffnen und Verschließen eines Abflußrohrs (12), das eine Toilettenschüssel (14) mit einem Fäkalien-Speichertank (16) verbindet, mit einer Klemmbalkenanordnung (50), die einen oberen Klemmbalken (54) auf einer Seite des Abflußrohrs (12) und einen unteren Klemmbalken (56) auf der entgegengesetzten Seite des Abflußrohrs (12) umfaßt, wobei die Klemmbalken (54, 56) über eine Verbindung miteinander verbunden sind, so daß eine Bewegung des oberen Klemmbalkens (54) vom unteren Klemmbalken (56) fort das Abflußrohr (12) öffnet, während eine Bewegung des oberen Klemmbalkens (54) auf den unteren Klemmbalken (56) zu das Abflußrohr (12) verschließt, gekennzeichnet durch:

a) ein erstes Glied (86) mit einem oberen Ende und einem daran angeordneten Hohlraum (96) sowie einem unteren Ende (88), das mit der Klemmbalkenanordnung (50) verbunden ist, um sich gemeinsam mit dem oberen Klemmbalken (54) zu bewegen;

b) ein zweites Glied (102) mit einem unteren Ende (104), das in dem Hohlraum (96) gehalten ist, wobei das zweite Glied (102) um einen begrenzten Weg relativ zum ersten Glied (86) bewegbar ist;

c) ein elastisches Glied (110) innerhalb des Hohlraums (96) des ersten Gliedes (86), wobei das elastische Glied (110) zwischen dem unteren Ende (104) des zweiten Gliedes (102) und dem ersten Glied (86) angeordnet ist;

d) ein Umkehrmittel (22, 116, 118), das mit einem oberen Ende (114) des zweiten Gliedes (102) verbunden ist, um eine Hin- und Herbewegung des zweiten Gliedes (102) in gegenläufigen Richtungen zu bewirken, wobei die Bewegung des zweiten Gliedes (102) in einer ersten Richtung das zweite Glied (102), das erste Glied (86) und den oberen Klemmbalken (54) anzieht, um das Abflußrohr (12) zu öffnen, während eine Bewegung des zweiten Gliedes (102) in einer zweiten, entgegengesetzten Richtung das zweite Glied (102) gegen das elastische Glied (110), das erste Glied (86) und den oberen Klemmbalken (54) drückt, um das Abflußrohr (12) zu verschließen; und

e) Schaltmittel (112, 132) zum Betätigen bzw. Abschalten der Umkehrmittel (22, 116, 118) als Reaktion auf eine Bewegung des zweiten Gliedes (102), wobei die Schaltmittel (112, 132) betätigt werden, um die Umkehrmittel (22, 116, 118) durch eine Bewegung des zweiten Gliedes (102) relativ zum ersten Glied (86) und durch ein Aufbringen von Kraft um das elastische Glied (110) um einen vorbestimmten Betrag zusammenzudrücken, abgeschaltet werden.

**Revendications**

1. Ensemble de contrôle de flux pour contrôler l'écoulement dans un tube (12) à partir d'une cuvette de toilette (14) vers un réservoir d'eaux usées (16) maintenu sous vide partiel, comprenant une section de tube flexible (20) reliée en série au tube (12) et un mécanisme de pincement (50 à 76, 82, 84) connecté de manière mobile à ladite section de tube (20) pour serrer ladite section flexible de tube (20) jusqu'à sa fermeture pour arrêter l'écoulement et pour dilater ladite section de tube (20) jusqu'à son ouverture pour permettre l'écoulement, caractérisé en ce qu'il comprend:

a) un moteur d'entraînement (22) présentant:
· un arbre de sortie (118) entraîné de manière sélective dans des directions opposées par ledit moteur d'entraînement (22) et;
· un moyen de contrôle (132) pour démarrer et arrêter ledit moteur d'entraînement (22);

b) des moyens de liaison (86 à 116, 122 à 132) reliant ledit arbre de sortie (118) audit mécanisme de pincement (50 à 76, 82, 84) pour serrer ladite section flexible de tube (20) jusqu'à sa fermeture lors du mouvement de l'arbre dans une direction, et pour dilater ladite section flexible de tube (20) jusqu'à son ouverture sous l'action du mouvement de l'arbre dans la direction opposée, lesdits moyens de liaison (86 à 116, 122 à 132) comprenant:

· des moyens d'introduction de jeu (86, 90 à 108), permettant un déplacement de portée limitée dudit arbre de sortie (118) sans entraîner l'ouverture ou la fermeture dudit mécanisme de pincement (50 à 76, 82, 84);

· un moyen de précontrainte élastique (110) relié avec lesdits moyens d'introduction de jeu (86, 90 à 108) pour éviter l'activation desdits moyens d'introduction de jeu (86, 90 à 108), jusqu'à ce que lesdits moyens de liaison (116) rencontrent une résistance d'intensité prédéterminée au mouvement dudit mécanisme de pincement (50 à 76, 82, 84), ledit moyen de précontrainte (110) présentant une raideur suffisante au regard de la force nécessaire pour fermer ladite section flexible de tube (20) en l'absence d'obstruction, de telle sorte que ladite section de tube (20) est serrée totalement jusqu'à sa fermeture sans activation desdits moyens d'introduction de jeu (86, 90 à 108), l'application d'une force supérieure à celle nécessaire pour fermer totalement ladite section flexible de tube (20) maîtrisant ledit moyen de précontrainte (110) pour permettre l'activation desdits moyens d'introduction de jeu (86, 90 à 108),

· et des moyens d'arrêt (112, 130) activés par lesdits moyens d'introduction de jeu (86, 90 à 108) et reliés de manière opérationnelle audit moyen de contrôle (132) pour arrêter ledit moteur (22) lorsque ledit moyen de liaison (116) applique une force d'intensité prédéterminée audit mécanisme de pincement (50 à 76, 82, 84) et lesdits moyens d'introduction de jeu (86, 90 à 108) ayant parcouru une distance prédéterminée.

2. Ensemble de contrôle de flux selon la revendication 1, caractérisé en ce que ledit mécanisme de pincement (50 à 76, 82, 84) comprend un ensemble de couteaux de pincement (50) présentant un couteau de pincement supérieur (54) sur une face de ladite section flexible de tube (20) et un couteau de pincement inférieur (56) sur la face opposée de ladite section flexible de tube (20), les couteaux de pincement (54, 56) étant connectés ensemble au moyen d'un bras pivot (64) de telle sorte que le mouvement du couteau du pincement supérieur (54) dans une direction vers le couteau de pincement inférieur (56) provoque le serrement de ladite section flexible de tube (20) jusqu'à sa fermeture, et le mouvement du couteau de pincement supérieur (54) dans la direction opposée, éloignée du couteau de pincement inférieur (56) provoque l'ouverture de ladite section flexible de tube (20).

3. Ensemble de contrôle de flux selon la revendication 1, caractérisé en ce que la liaison (116) pour relier ledit arbre de sortie (118) audit mécanisme de pincement (50 à 76, 82, 84) comprend:

– un cylindre (86) ayant l'une de ses extrémités reliée audit mécanisme de pincement (50, 76, 82, 84) et l'autre extrémité se présentant sous forme d'enceinte (96);

– un piston (102) présentant une extrémité reliée audit arbre de sortie (118) et l'autre extrémité étant maintenue selon un mouvement alternatif de distance limitée dans l'enceinte (96) dudit cylindre (86) et;

– un ressort (110) interposé dans l'enceinte (96) dudit cylindre (86) entre ledit cylindre (86) et l'autre extrémité dudit piston (102), ledit ressort (110) étant comprimé lorsque la section flexible de tube (20) est fermée;

le mouvement de l'arbre de sortie (118) dans une direction poussant ledit piston (102) contre ledit ressort (110) et ledit cylindre (86) et déplaçant le mécanisme de pincement (50, 76, 82, 84) pour fermer la section flexible de tube (20), et le mouvement de l'arbre de sortie (118) dans la direction opposée, tire ledit cylindre (86) selon une direction éloignée du tube (12) et déplace le mécanisme de pincement (50, 76, 82, 84) jusqu'à l'ouverture de ladite section flexible de tube (20).

4. Ensemble de contrôle de flux selon la revendication 3, caractérisé en ce que ledit ressort (110) a une force de compression supérieure à la force nécessaire pour fermer ladite section flexible de tube (20) en l'absence d'obstruction.

5. Ensemble de contrôle de flux selon la revendication 1, caractérisé en ce que ledit moyen de précontrainte élastique est un ressort (110) présentant une force de compression supérieure à la force nécessaire pour fermer ladite section flexible de tube (20) en l'absence d'obstruction.

6. Ensemble de contrôle de flux selon la revendication 1, caractérisé en ce que ledit moyen de contrôle (132) inclut un moyen relié audit moteur d'entraînement (22) pour ajuster la vitesse de rotation dudit arbre de sortie (118) afin de permettre audit mécanisme de pincement (50 à 76, 82, 84) d'ouvrir et de fermer ladite section flexible de tube (20) selon différents degrés.

7. Ensemble de contrôle de flux selon la revendication 1, caractérisé en ce que ledit moteur d'entraînement (22) est un moteur à courant continu et ledit moyen de contrôle (132) comprend un moyen pour connecter les sorties positives et négatives dudit moteur d'entraînement (22) pour produire une rupture dynamique afin de neutraliser l'inertie du moteur lorsque ledit moyen d'arrêt (112, 130) stoppe ledit moteur d'entraînement (22).

8. Ensemble pour valve de toilette pour contrôler l'écoulement des eaux usées à partir d'une cuvette de toilette (14) jusqu'à un réservoir pour eaux usées (16) à travers un tube (12), comprenant une section flexible de tube (20) en série avec le tube (12) et un mécanisme de pincement (50, 76, 82, 84) destiné à se déplacer selon une première direction sous l'action d'une force d'activation pour dilater ladite section flexible de tube (20) jusqu'à une position ouverte pour permettre l'écoulement des eaux usées à travers le tube (12) et, selon une seconde direction sous l'action d'une force pour pincer ladite section flexible de tube (20) selon une position fermée pour arrêter l'écoulement des eaux usées à travers le tube (12), l'ensemble présentant de plus un activateur (86, 116, 122 à 132) pour appliquer une force d'activation dans la première et la seconde direction audit mécanisme de pincement (50 à 76, 82, 84) caractérisé en ce que:

a) ledit activateur (86 à 116, 122, 132) présente:

· un moteur d'entraînement (22) relié à une source d'énergie;

· un arbre de sortie (118) relié audit moteur d'entraînement (22) entraîné de manière sélective dans la première et la seconde direction;

· un premier élément (102, 114, 116) relié audit arbre de sortie (118);

· un second élément (76, 86) relié audit mécanisme de pincement (50, 76, 82, 84);

· un élément élastique (110) interposé entre ledit premier élément (102, 114, 116) et ledit second élément (76, 86) et;

b) un moyen de commutation (112) activé par le mouvement dudit premier élément (102, 114, 116) relativement audit second élément (76, 86) et connecté de manière opérationnelle audit activateur (86 à 116, 122 à 132) pour connecter et déconnecter la source d'énergie dudit moteur (22), ledit moyen de commutation (112) déconnectant la source d'énergie dudit moteur (22) après que ledit activateur (86 à 116, 122 à 132) ait appliqué une force d'intensité prédéterminée audit mécanisme de pincement (50, 76, 82, 84) et que l'élément élastique (110), ait été comprimé d'une quantité prédéterminée.

9. Valve de chasse (10) pour ouvrir et fermer un tube (12) reliant une cuvette de toilette (14) et un réservoir pour eaux usées (16), comprenant un ensemble de couteaux de pincement (50) présentant un couteau de pincement supérieur (54) sur l'une des faces du tube (12) et un couteau de pincement inférieur (56) sur la face opposée du tube (12), les couteaux de pincement (54, 56) étant reliés par un moyen de liaison, de telle sorte que le mouvement du couteau de pincement supérieur (54) en direction opposée au couteau de pincement inférieur (56) ouvre le tube (12) et le mouvement du couteau de pincement supérieur (54) vers le couteau de pincement inférieur (56) ferme le tube (12), caractérisé en ce que:

a) un premier élément (86) présentant une extrémité supérieure munie d'une enceinte (96) et une extrémité inférieure (88) reliée audit ensemble de couteaux de pincement (50) pour se déplacer avec ledit couteau de pincement supérieur (54);

b) un second élément (102) présentant une extrémité inférieure (104) maintenue dans l'enceinte (96), ledit second élément (102) pouvant se déplacer selon une distance limitée par rapport audit premier élément (86);

c) un élément élastique (110) contenu dans l'enceinte (96) dudit premier élément (86) et positionné entre l'extrémité inférieure (104) dudit second élément (102), et ledit premier élément (86);

d) des moyens à mouvement alternatif (22, 106, 118) reliés à une extrémité supérieure (114) dudit second élément (102) pour provoquer un mouvement alternatif dudit second élément (102) dans des directions opposées, le mouvement dudit second élément (102) dans une première direction provoquant la traction dudit second élément (102), dudit premier élément (86) et dudit couteau de pincement supérieur (54) provoquant l'ouverture du tube (12), le mouvement dudit second élément (102) dans la seconde direction opposée, poussant ledit second élément (102) contre ledit élément élastique (110), et ledit premier élément (86) et le couteau de pincement supérieur (54) afin de provoquer la fermeture du tube (12); et

e) un moyen de commutation (112, 132) pour activer et désactiver lesdits moyens de mouvement alternatif (22, 116, 118) en réponse au mouvement dudit second élément (102), ledit moyen de commutation (102, 112 à 132) étant activé pour mettre hors service lesdits moyens de mouvement alternatif (22, 116, 118) par le mouvement dudit second élément (102) par rapport audit premier élément (86) et par l'application d'une force pour provoquer la compression dudit élément élastique (110) d'une quantité prédéterminée.

FIG.1.

FIG. 2.

FIG. 3.

FIG. 5.

FIG. 4.